# EUROPEAN PATENT SPECIFICATION

(11) **EP 4 225 481 B1**
(45) Date of publication and mention of the grant of the patent: **28.10.2026**
(21) Application number: 21762139.0
(22) Date of filing: 26.08.2021
(51) Int. Cl.: B01F 23/411, B01F 23/41, B01F 25/21, B01F 25/50, B01F 25/52, B01F 31/80, B01F 33/451, B01F 33/82

(54) **APPARATUS FOR STABLE NANO EMULSIONS OF WATER IN DIESEL FUEL**
VORRICHTUNG FÜR STABILE NANOEMULSIONEN VON WASSER IN DIESELKRAFTSTOFF
APPAREIL POUR NANO-ÉMULSIONS STABLES D'EAU DANS DU CARBURANT DIESEL

(30) Priority: 01.09.2020 IT 202000020803
(43) Date of publication of application: 16.08.2023
(73) Proprietor: Fumagalli, Enrico Carlo, 6900 Lugano (CH)
(72) Inventor: Fumagalli, Enrico Carlo, 6900 Lugano (CH)
(74) Representative: PGA S.p.A.
(86) International application number: PCT/IB2021/057825
(87) International publication number: WO 2022/049463

(56) References cited:
- EP-A1- 1 560 641
- DE-A1- 2 343 811

## Description

### Field of the invention

The present invention relates to an apparatus and to a process for stable nano emulsions of water in diesel fuel. The present invention refers in particular to the production of water/diesel oil emulsions for internal combustion diesel engines with the aim of reducing the pollutants generated by the combustion.

### Background of the invention

The resulted rising fuel costs and more and more stringed emission standards have driven researchers to look into new solutions for increased engine efficiency and reduced emissions for future transportation system as well as power plants.

Diesel engines are obtaining more and more attention in transportation, industrial and agricultural applications due to their high efficiency and reliability. Also transportation has seen growth in recent decades due to new demand for personal- use vehicles powered by internal combustion engine.

Diesel engines also face the major disadvantage of increased NOx emissions. Future legislation to control vehicle exhaust emissions will restrict NOx emissions to very low levels.

As the formation of NOx emissions highly depends on the operating temperature, various methods including exhaust gas recirculation technology, and retarding fuel injection timing have been developed to bring down the peak temperature, thereby reducing NOx emissions.

Water injection is also an effective method to reduce NOx emissions. The use of water into diesel engines has a lot of benefits. For example, water can effectively reduce the peak flame temperature and thereby reducing NOx emissions. Methods of introducing water into the engine, most of them are: water injection into the cylinder using a separate injector, spraying water into the intake manifold, and water/diesel emulsions.

The first two methods are accompanied by a significant increase of HC and CO emissions.

Meanwhile the presence of liquid water in the combustion chamber results in oil contamination and an increase in engine wear.

To overcome these disadvantages resulted from water injection on the engine performance, water/diesel emulsion fuels have been developed, which is the addition of surfactants to reduce the oil and water surface tension, activate their surface, and maximize their superficial contact areas to form finely dispersed droplets phase.

Emulsion droplets are normally stabilized by surfactants or amphiphilic polymers. The adsorbed surfactant causes lowering in interfacial tension between water molecules and diesel which further promotes easier emulsification and stabilizes the droplet against coalescence by static or electrostatic repulsion.

Document WO2016/074903 discloses an apparatus for preparing a water/diesel oil micro-emulsion, comprising a diesel oil feeding unit, an emulsifying composition feeding unit, a water feeding unit, a mixing tank and a mixing device operatively connected to the mixing tank. The water/diesel oil micro-emulsion is obtained by recirculating a batch contained in the mixing tank and comprising the diesel oil, the emulsifying composition and the water through a recirculation conduit and through the mixing device.

Document WO2016/074904 discloses a water in diesel oil fuel micro-emulsion for internal combustion diesel engines, comprising from 5.0 to 30.0 % by weight of water, from 95.0 to 70.0 % by weight of diesel oil, and an emulsifying composition, with surfactants, in amount of at most 3.0% by weight.

Also known is document EP1560641 which outlines a method and a system for the emulsification of a pre-mix of two or more immiscible liquids by flowing or circulating one or more times said pre-mix through one or more magnetic fields. Also known is document DE2343811 which discloses a reactor for physical and chemical processes in a fluidized bed of ferromagnetic particles which has a reaction container surrounded on the outside by an inductor to produce a rotating electromagnetic field acting on the particles within the container in a field action zone which is limited by an annular screen that can rotate about the axis of an inductor.

In this field, the Applicant has observed that the standard fuel emulsion formation processes and the performance of the fuel emulsions obtained therefrom may be improved.

The Applicant perceived the need to improve the following properties of said fuel emulsions:
▪ longer stability of the emulsion over time;
▪ no surfactant usage required to achieve stability
▪ persistence of the emulsion in the presence of thermal and/or kinetic energy variances in the fuel during storage;
▪ greater reduction of harmful emissions during combustion;
▪ improved combustion efficiency.

The Applicant perceived that decreasing mean droplet size during the fuel emulsion formation processes allows to increase many of the above named properties.

The Applicant found that the use of magnetite nano-particles activated through a dynamic magnetic field, to obtain a fuel emulsion, improves each of the above listed properties of fuel emulsions.

The Applicant also found that the utilization of magnetite nano-particles activated through a dynamic magnetic field in combination (synergic effect) with mixing via a mixing device and/or a cavitation device allows to definitely improve each of the above listed properties of the fuel emulsions.

### Summary of the invention

In a first aspect, the invention relates to an apparatus for stable nano emulsions of water in diesel fuel.

The apparatus for stable nano emulsion of water in diesel fuel comprises:
at least one diesel fuel feeding unit;
at least one water feeding unit;
at least one magnetite nano-particles feeding unit comprising the magnetite nano-particles;
a mixing tank in fluid communication with the diesel fuel feeding unit, with the water feeding unit and with the magnetite nano-particles feeding unit;
at least one recirculation conduit presenting opposite ends connected to the mixing tank;
at least one pump placed on said recirculation conduit and configured to recirculate a mixture comprising the diesel fuel, the water and the magnetite nano-particles.

The apparatus further comprises at least one dynamic magnetic field generator operationally coupled to the recirculation conduit and configured to generate a dynamic magnetic field inside at least a section of the recirculation conduit.

In a second aspect, the invention relates to a process for stable nano emulsion of water in diesel fuel.

The process comprises:
feeding a predetermined amount of a diesel fuel into a mixing tank;
feeding a predetermined amount of water, optionally demineralized water, into the mixing tank;
feeding a predetermined amount of magnetite nano-particles into the mixing tank;
recirculating a batch of mixture in the mixing tank comprising the diesel fuel, the water and the magnetite nano-particles through recirculation conduit comprising a mixing device and/or a cavitation device;
wherein a flow of the mixture flowing through the recirculation conduit is also subjected to a dynamic magnetic field to move the magnetite nano-particles and promoting emulsion;
discharging the emulsion batch from the mixing tank;
optionally, removing the magnetite nano-particles from the emulsion.

In one aspect, the process is performed in the apparatus according to the first aspect and/or according to one or more of the following aspects.

The Applicant verified that the magnetite nano-particles moving through fluids at high speed and at a median size interval of 1-100 nanometers create turbulence at the nano-meter level and contribute to the formation of substantially smaller droplet sizes in the emulsion. Magnetic energy is transferred into nano-scale kinetic energy, which pushes median droplet size down during emulsion formation. Therefore, performance of known fuel emulsions may be greatly improved.

The Applicant also verified that the use of magnetite nano-particles display a number of features that are superior to prior art processes for preparing emulsions of water in diesel fuel.

A first feature is that magnetite nano-particles have no hysteresis loop. Prior magnetization does not alter their permanent state. In other words, from a performance perspective, magnetite nanoparticles display magnetic properties that can be switched on and off.

A second feature is that magnetite nano-particles have mean droplet sizes that range from 1-100 nanometers. The larger the median droplet size, the more surfactant is required to stabilize the droplet and the more minor variances in thermal and/or kinetic energy can disperse the emulsion.

A third feature is that magnetite nano-particles are chemically neutral with respect to the fluids undergoing emulsion. Further aspects of the invention are presented below.

In an aspect, at least one mixing device is placed at one end of said recirculation conduit.

In an aspect, recirculating the batch of mixture in the mixing tank comprises: flowing the mixture through at least one mixing device.

In an aspect, recirculating the batch of mixture in the mixing tank comprises: applying the dynamic magnetic field to the mixture flowing through said at least one mixing device.

In an aspect, recirculating the batch of mixture in the mixing tank comprises: spraying the mixture in the mixing tank via said at least one mixing device.

In an aspect, said at least one mixing device comprises a duct for a flow of the mixture, said duct extending along a main direction and presenting an inlet and an outlet.

In an aspect, at least the outlet of the at least one mixing device is positioned inside the mixing tank and is configured to spray the recirculated mixture into the tank.

In an aspect, said at least one mixing device is cantilevered with respect to a pipe section of the recirculation conduit. In an aspect, a plurality of said mixing devices are installed inside the mixing tank.

In an aspect, a plurality of mixing devices are placed at one end of respective pipe sections of the recirculation conduit. In an aspect, the main directions of the mixing devices are skewed with respect to a central axis of the mixing tank to impart a rotational motion to the mixture in the mixing tank by spraying the recirculated mixture into the tank.

In an aspect, a rotor is installed rotatably inside the duct and extends all along the duct of said at least one mixing device.

In an aspect, the rotor comprises a plurality of radial projections.

In an aspect, the plurality of radial projections comprises at least one pair, optionally a plurality of pairs, of radial projections; wherein the radial projections of each pair develop along opposite radial directions.

In an aspect, the plurality of radial projections comprises at least one assembly, optionally a plurality of assemblies, of four radial projections arranged in a cross.

In an aspect, said pairs and said assemblies are alternated along the rotor.

In an aspect, the two radial projections of one pair are rotated by a first predefined angle with respect to the two radial projections of an adjacent pair; optionally wherein said first predefined angle is 90°.

In an aspect, the four radial projections of one assembly are rotated by a predefined second angle with respect to the four radial projections of an adjacent assembly; optionally wherein said second predefined angle is 30°.

In an aspect, the four radial projections of one assembly are rotated by a predefined third angle with respect to the two radial projections of an adjacent pair; optionally wherein said third predefined angle is 30°.

In an aspect, each of the four radial projections of each assembly has a prismatic shape.

In an aspect, the two radial projections of each pair have a cylindrical shape.

In an aspect, said at least one dynamic magnetic field generator is coupled to said at least one mixing device and the section of the recirculation conduit with the dynamic magnetic field is the duct of the mixing device.

In an aspect, said at least one dynamic magnetic field generator is placed around the rotor.

In an aspect, said at least one mixing device comprises a tubular housing delimiting the duct and hosting the rotor, wherein the rotor revolves inside the tubular housing.

In an aspect, said at least one dynamic magnetic field generator is placed around the tubular housing.

In an aspect, an actuator or motor is connected to the rotor to revolve the rotor.

In an aspect, the dynamic magnetic field generator or another auxiliary magnetic field generator may be used to rotate the rotor of the mixing device, like an electric motor.

In an aspect, at least one cavitation device, optionally a plurality of cavitation devices, is/are placed on the recirculation conduit.

In an aspect, the at least one cavitation device is placed on a respective delivery pipe of the recirculation conduit, wherein the delivery pipe extends from a discharge of the pump to the mixing tank, optionally to one of the mixing devices placed in the mixing tank.

In an aspect, a return pipe of the recirculation conduit extends from a suction end of said pipe in the mixing tank to a suction of the pump.

In an aspect, said at least one cavitation device comprises: a channel for a flow of the mixture, said channel extending along a main direction and presenting an inlet and an outlet.

In an aspect, a sonotrode is installed inside the channel and is configured to generate sound waves.

In an aspect, said at least one dynamic magnetic field generator is coupled to the cavitation device and the section of the recirculation conduit with the dynamic magnetic field is the channel of the cavitation device.

In an aspect, recirculating the batch of mixture in the mixing tank comprises: flowing the mixture through at least one cavitation device.

In an aspect, recirculating the batch of mixture in the mixing tank comprises: generating ultrasound waves in the mixture via at least one cavitation device.

In an aspect, recirculating the batch of mixture in the mixing tank comprises: applying the dynamic magnetic field to the mixture flowing through said at least one cavitation device.

In an aspect, the sonotrode comprises a plurality of laminae installed inside the channel and actuators to make the laminae vibrate.

In an aspect, the laminae are arranged according to a helical shape.

In an aspect, the laminae delimit a spiral path through the channel.

In an aspect, at least one ammonia feeding unit is in fluid communication with the mixing tank.

In an aspect, at least one methanol feeding unit is in fluid communication with the mixing tank.

In an aspect, the process comprises: feeding a predetermined amount of ammonia and/or methanol into the mixing tank so that the batch of mixture in the mixing tank comprises also ammonia and/or methanol.

In an aspect, the mixing tank comprises a plurality of fins or flaps protruding from an inner surface of said mixing tank. In an aspect, the fins or flaps are directed radially inward.

In an aspect, each of fins or flaps extends parallel with respect to the central axis of the mixing tank.

In an aspect, the water feeding unit comprises the water.

In an aspect, the diesel fuel feeding unit comprises the diesel fuel.

In an aspect, the magnetite nano-particles are stored in the magnetite nano-particles feeding unit and fed to the mixing tank in the form of a ferromagnetic fluid.

In an aspect, the mixture comprises 0% to 20% of water.

In an aspect, the mixture comprises 1% to 2% of ferromagnetic fluid.

In an aspect, the mixture comprises 1% to 2% of ammonia.

In an aspect, the mixture comprises 5% to 10% of methanol.

In an aspect, diesel fuel is diesel and/or bio-diesel.

In an aspect, the magnetite nano-particles are magnetically removed from the emulsion.

In an aspect, the magnetite nano-particles may be reused.

Further characteristics and advantages will be clear from the detailed description of a preferred but not exclusive embodiment of an apparatus and a process for stable nano emulsions of water in diesel fuel in accordance with the present invention.

### Description of drawings

Such description will be set forth hereinbelow with reference to the set of drawings, provided merely as a non-limiting example, in which:
Figure 1 shows a schematic plan view of an apparatus according to the invention;
Figure 2 is a lateral elevation view of the apparatus of Figure 1;
Figure 3 is a sectional view of a mixing tank of the apparatus of Figure 2;
Figure 4 is an enlarged view of a part of Figure 3;
Figure 5 is a detailed sectional view of a device shown in Figure 4;
Figure 6 shows a three-dimensional perspective view of an element of the device of Figure 5; and

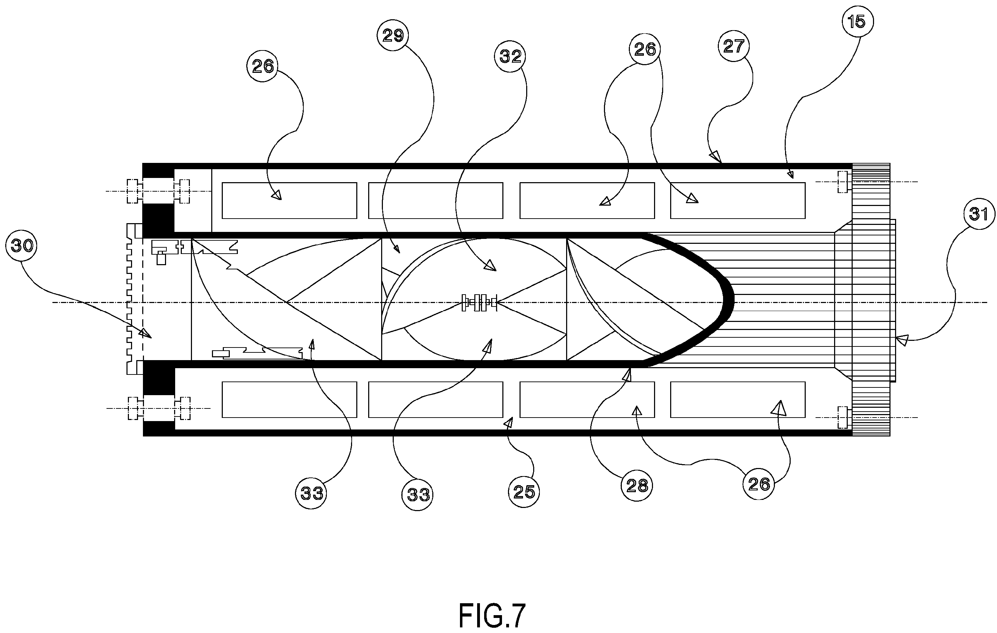

Figure 7 is a sectional view of another device of the apparatus of the previous Figures.

### Detailed description

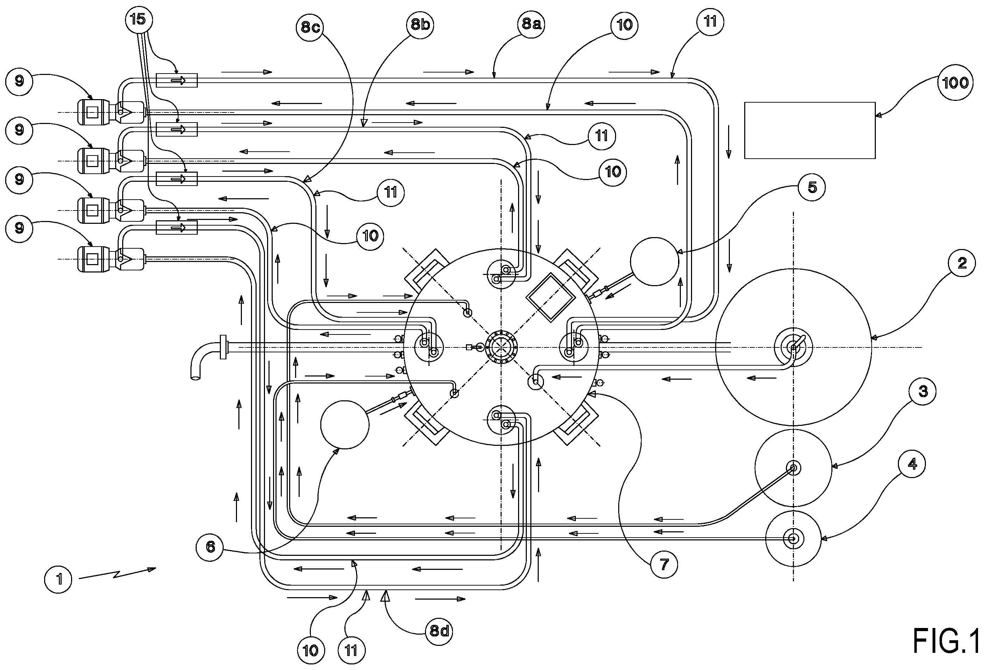

Referring to the attached schematic figure 1, an apparatus for stable nano emulsion of water W in diesel fuel F is identified by reference numeral 1. The apparatus 1 comprises a first reservoir for a diesel fuel F defining a diesel fuel feeding unit 2, a second reservoir for demineralized water W defining a water feeding unit 3, a third reservoir for a ferromagnetic fluid defining a magnetite nano-particles MNP feeding unit 4, a fourth reservoir for ammonia defining an ammonia feeding unit 5, a fifth reservoir for methanol defining a methanol feeding unit 6.

All these reservoirs 2, 3, 4, 5, 6 are connected via pipes to a mixing tank 7 and are therefore in fluid communication with said mixing tank 7. Valves and other suitable devices, not shown, are operatively coupled to the reservoirs 2, 3, 4, 5, 6 and/or to the pipes to open or close fluid communication.

The apparatus 1 further comprises four recirculation conduits 8a, 8b, 8c, 8d. Each of the recirculation conduits 8a, 8b, 8c, 8d comprises a pump 9, a return pipe 10 and a delivery pipe 11. The return pipe 10 has a first end (suction end 12) placed inside the mixing tank 7 and a second end connected to a suction of the pump 9. The delivery pipe 11 has a first end (delivery end 13) placed inside the mixing tank 7 and a second end connected to a delivery of the pump 9.

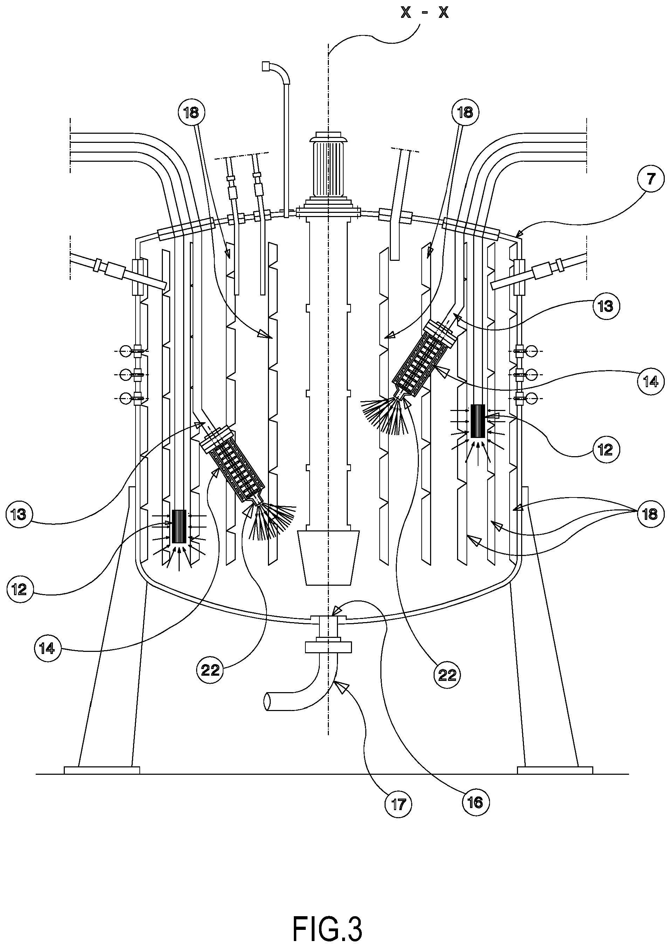

One mixing device 14 is placed at the delivery end 13 of each recirculation conduit 8a, 8b, 8c, 8d. Each mixing device 14 is cantilevered with respect to the delivery pipe 11 and is installed inside the mixing tank 10 (Figure 3).

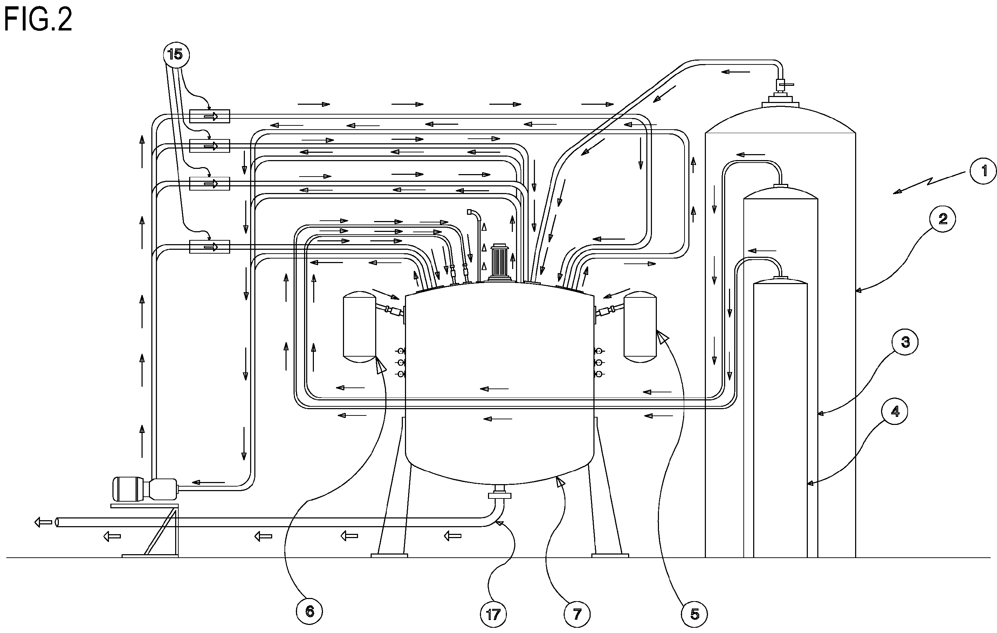

One cavitation device 15 is placed on the delivery pipe 11 of each recirculation conduit 8a, 8b, 8c, 8d (Figures 1 and 2). Cavitation refers to the formation of rapid collapse of bubbles in a liquid. Cavitation can be produced in different ways: e.g. by high-pressure nozzles, rotor-stator mixers or ultrasonic processors. In all these systems, the input energy is transformed into friction, turbulences, waves and cavitation. This process produces high local heat and pressure and rapid heating and cooling rates. The resultant turbulence creates enough agitation at the micron level in liquids to break surface tension and accelerate formation of nano-emulsions.

The mixing tank 7 has a plurality of fins or flaps 18 protruding from an inner surface of said mixing tank 7 (Figure 3). The fins or flaps are directed radially inward and each of the fins or flaps extends parallel with respect to a central axis X-X of the mixing tank 7. The fins or flaps appear as ribs on the inner surface of said mixing tank 7.

The pipes of the recirculation conduits 8a, 8b, 8c, 8d and the pipes coming from the reservoirs 2, 3, 4, 5, 6 enter the mixing tank 7 at an upper portion of said mixing tank 7. The mixing tank 7 has also a discharge port 16 positioned at a bottom wall of said tank and connected to a discharge pipe 17.

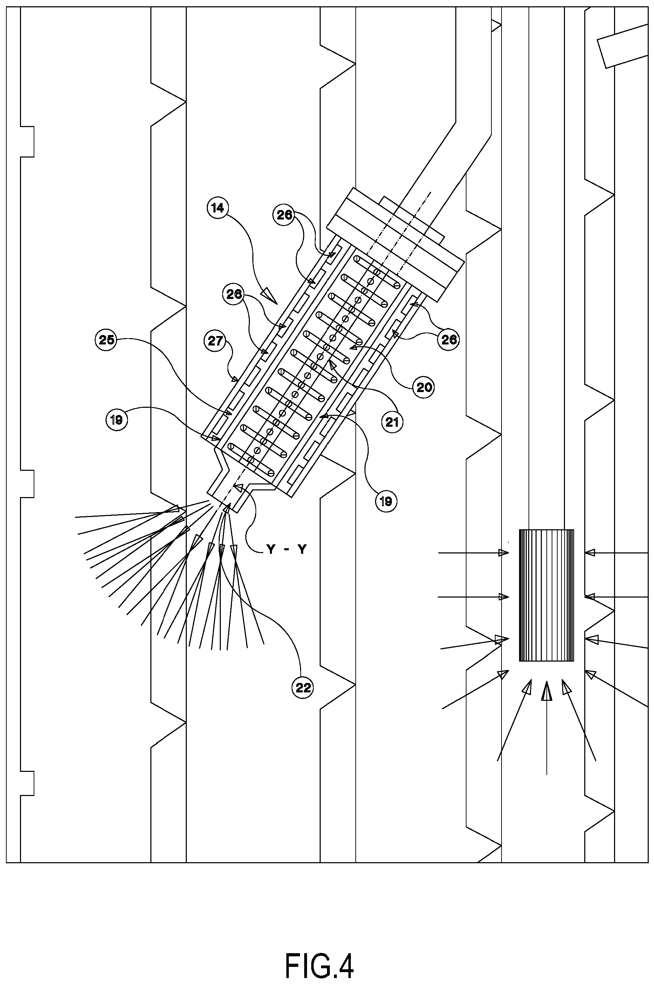

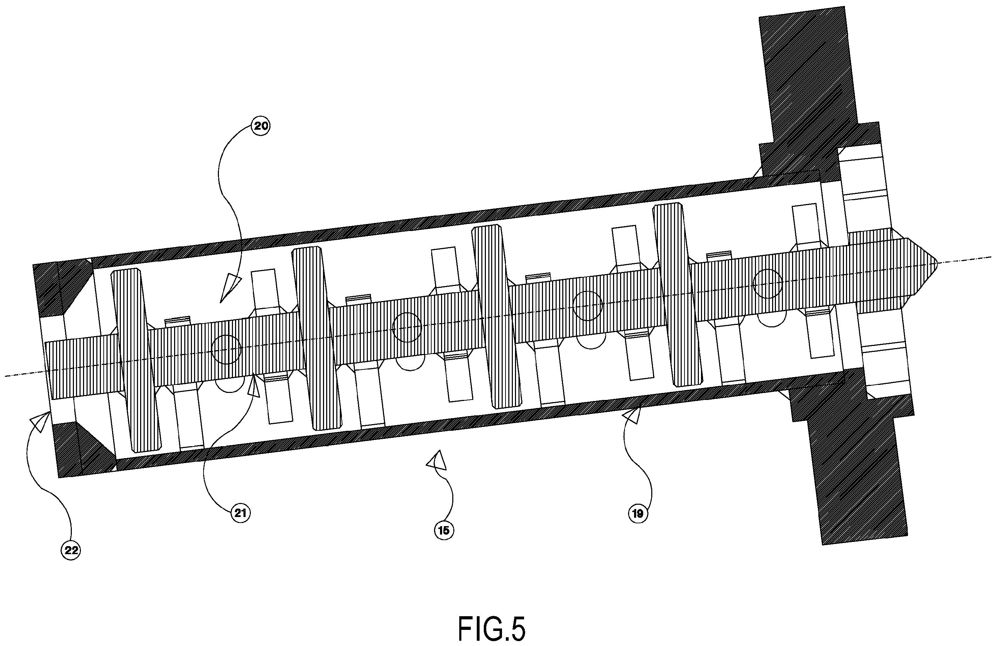

Each mixing device 14 comprises (Figures 4, 5 and 6) a tubular housing 19 delimiting a duct 20 and hosting a rotor 21 inside said duct 20, such that the rotor 21 may revolve inside the tubular housing 19. The rotor 21 extends all along the duct and may be supported in the tubular housing 19 via bearings, not shown. An actuator or motor, not shown, is mechanically connected to the rotor 21 to revolve the rotor 21 around a rotation axis Y-Y, which is also a main axis of the tubular housing 19 and of the duct 20.

The duct 20 extends along a main direction parallel to the respective main axis Y-Y and has an inlet connected to the delivery end 13 of the delivery pipe 11 and an outlet 22 facing into the mixing tank 7. The main directions of the mixing devices 7 are skewed with respect to the central axis X-X.

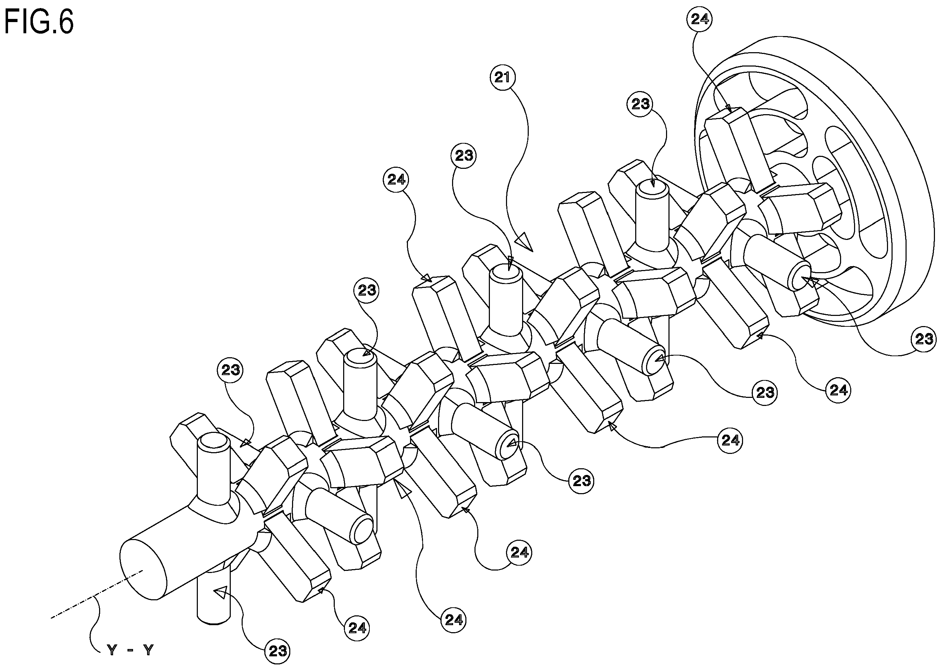

The rotor 21 comprises (Figure 6) a plurality of radial projections and said radial projections comprise a plurality of pairs 23 of radial projections and a plurality of assemblies 24 of four radial projections each arranged in a cross. Said pairs 23 and said assemblies 24 are alternated along the rotor. In the illustrated embodiment, the rotor 21 comprises eight pairs 23 and eight assemblies 24.

The two radial projections of each pair 23 develop along opposite radial directions and have a cylindrical shape with a circular cross section. The two radial projections of one pair 23 are rotated by a first predefined angle of 90° with respect to the two radial projections of an adjacent pair 23.

Each of the four radial projections of each assembly 24 has a prismatic shape with a rectangular cross section. The four radial projections of one assembly 24 are rotated by a predefined second angle of 30° with respect to the four radial projections of an adjacent assembly and said four radial projections of one assembly 24 are rotated by a predefined third angle of 30° with respect to the two radial projections of an adjacent pair 23.

A dynamic magnetic field generator 25 is operationally coupled to the mixing device 14. The dynamic magnetic field generator 25 comprises a plurality of electromagnets or coils 26 suitably powered, placed in an auxiliary tubular housing 27 and surrounding the tubular housing 19. The plurality of electromagnets or coils are accommodated in a cylindrical seat delimited between the auxiliary tubular housing 27 and the tubular housing 19 (Figure 4).

The dynamic magnetic field generator 25 is configured to generate a dynamic magnetic field inside the duct 20 of the mixing device 14.

In an embodiment, not shown, the dynamic magnetic field generator or another auxiliary magnetic field generator may be used to rotate the rotor of the mixing device 14, like an electric motor.

Each cavitation device 15 comprises a respective tubular housing 28 delimiting a channel 29 extending along a main direction and presenting an inlet 30 and an outlet 31. A sonotrode 32 is installed inside the channel 29 and is configured to generate ultrasonic sound waves. The sonotrode 32 comprises a plurality of laminae 33 installed inside the channel 29 and actuators, not shown, configured to make the laminae 33 vibrate and generate the ultrasonic sound waves. The laminae 33 are arranged according to a helical shape and delimit a spiral path through the channel 29.

A dynamic magnetic field generator 25 is also operationally coupled to each cavitation device 15 to generate a dynamic magnetic field also inside the channel 29 of the cavitation device 15. This dynamic magnetic field generator 25 may have the same structure of the dynamic magnetic field generator 25 coupled to the mixing device 14.

A control unit 100 may be connected to the valves, the pumps 9, the mixing devices 14, the cavitation devices 15, the dynamic magnetic field generators 25 to control the apparatus 1.

In use and according to the process of the present invention, the ferromagnetic fluid may be prepared as follows.

The superparamagnetic iron oxide (Fe₃O₄) nano-particles are first synthetized. The Fe₃O₄ nano-particles are prepared by chemical precipitation using ferrous salts in an alkali medium and then are sterically stabilized by oleic acid C₁₈H₃₄O₂ and poly-12-hydroxystearic acid. The purified magnetite nano-particles MNP are dispersed in inhibited mineral transformer oil with the density of 824 kg/m³ and viscosity of 3.08 mPa·s at 15°C. Such a colloidal suspension of mono-domain magnetic particles is called a ferromagnetic fluid. This colloidal suspension exists as a neutral ferrofluid that is chemically inert and that is only activated through the dynamic magnetic field.

The reservoirs 2, 3, 4, 5, 6 are filled respectively with diesel and/or bio-diesel fuel F, demineralized water W, ferromagnetic fluid, ammonia and methanol.

Predetermined amounts of diesel and/or bio-diesel fuel F, demineralized water, ferromagnetic fluid, ammonia and methanol are fed into the mixing tank 7. For instance: 75% diesel and/or bio-diesel fuel F, 15% demoralized water W, 2% ferromagnetic fluid, 1% ammonia, 7% methanol. The magnetite nano-particles MNP may be added to water W prior to emulsion.

In the filled mixing tank 7, the mixing devices 14 or at least their outlets 22 are submerged in a batch of mixture comprising the diesel and/or bio-diesel fuel F, demineralized water W, ferromagnetic fluid, ammonia and methanol previously fed to the mixing tank 7.

Pumps 9 are activated to recirculate the batch through the recirculation conduits 8a, 8b, 8c, 8d and said mixing tank 7. A flow of the mixture flows from the mixing tank 7, through the suction ends 12 of the return pipes 10, the return pipes 10, the pumps 9, the delivery pipes 11, into the mixing tank 7 and again into the suction ends 12.

Therefore, the mixture flows through the channels of the cavitation devices 15. In said cavitation devices 15, the mixture is subjected to the ultrasound waves and to the dynamic magnetic fields.

The mixture flows also through the ducts 20 of the mixing devices 14. In said mixing devices 14, the mixture is mechanically mixed by the rotating rotors 21 and also subjected to the dynamic magnetic fields.

In an off state, if no dynamic magnetic field is present, the magnetite nano-particles MNP exist within the mixture, but are kinetically inert. In an on state, with the magnetic field activated, the dynamic field alters the direction and intensity of said field in a preset pattern, such that magnetite nano-particles move within the emulsion in a specific pattern (circular, random, etc..). Magnetite nano-particles moving through the mixture at high speed and at a median size interval of 1-100 nanometers create turbulence at the nano-meter level and contribute to the formation of substantially smaller droplet sizes in the emulsion.

In case the magnetite nano-particles activated by the dynamic magnetic field are used in combination (synergic effect) with mixing via the mixing device 14 and/or the cavitation device 15, emulsion performance are maximized through decreasing mean emulsion droplet size and decreasing need for surfactant induced stability of nano-emulsions.

Due to the action of the mixing devices 14 and the pressure generated by the pumps 9, the mixture is sprayed in the mixing tank 7 by the mixing devices 14. Since the mixing devices 14 are skewed with respect to the central axis X-X of the mixing tank 7, a rotational motion is imparted to the mixture which also impacts against the fins or flaps 18.

At the end of the process, a stable emulsion of water W in diesel fuel F is obtained and the emulsion batch may be discharged from the mixing tank 7 through the discharge port 16 and discharge pipe 17.

The magnetite nano-particles MNP in the emulsion may be removed from the emulsion without damaging the emulsion, e.g. magnetically removed, and may be also reused.

In some embodiments, not shown in the attached Figures, the dynamic magnetic field generator/s 25 may be placed in other site/s along the recirculation conduit/s.

In some embodiments, not shown in the attached Figures, the dynamic magnetic field generator/s 25 may be coupled to the mixing device/s only or to the cavitation device/s only.

In some embodiments, rotation of the rotor/s 21 may be caused by the dynamic magnetic field/s generated by dynamic magnetic field generator/s 25 surrounding the rotor 21.

## Claims

1. Apparatus for stable nano emulsions of water in diesel fuel, comprising:
at least one diesel fuel feeding unit (2);
at least one water feeding unit (3);
at least one magnetite nano-particles feeding unit (4) comprising the magnetite nano-particles (MNP);
a mixing tank (7) in fluid communication with the diesel fuel feeding unit (2), with the water feeding unit (3) and
with the magnetite nano-particles feeding unit (4);
at least one recirculation conduit (8a, 8b, 8c, 8d) presenting opposite ends connected to the mixing tank (7);
at least one pump (9) placed on said recirculation conduit (8a, 8b, 8c, 8d) and configured to recirculate a mixture comprising the diesel fuel (F), the water (W) and the magnetite nano-particles (MNP);
at least one dynamic magnetic field generator (25) operationally coupled to the recirculation conduit (8a, 8b, 8c, 8d) and configured to generate a dynamic magnetic field inside at least a section of the recirculation conduit (8a, 8b, 8c, 8d).

2. The apparatus of claim 1, comprising at least one mixing device (14) placed at one end of said recirculation conduit (8a, 8b, 8c, 8d);
wherein said at least one mixing device (14) comprises:
a duct (20) for a flow of the mixture, said duct (20) extending along a main direction (X-X) and presenting an inlet and an outlet (22);
a rotor (21) installed rotatably inside the duct (20) and extending all along the duct (20);
wherein the rotor (20) comprises a plurality of radial projections;
wherein at least the outlet (22) of the at least one mixing device (14) is positioned inside the mixing tank (7) and
is configured to spray the recirculated mixture into the tank (7);
wherein said at least one dynamic magnetic field generator (25) is coupled to the mixing device (14) and the section of the recirculation conduit (8a, 8b, 8c, 8d) with the dynamic magnetic field is the duct (20) of the mixing device (14).

3. The apparatus of claim 2, comprising a plurality of said mixing devices (14) installed inside the mixing tank (7), wherein the main directions (X-X) of the mixing devices (14) are skewed with respect to a central axis (X-X) of the mixing tank (7) to impart a rotational motion to the mixture in the mixing tank (7) by spraying the recirculated mixture into the tank (7).

4. The apparatus of claim 1 or 2 or 3, comprising at least one cavitation device (15) placed on the recirculation conduit (8a, 8b, 8c, 8d); wherein said at least one cavitation device (15) comprises:
a channel (29) for a flow of the mixture, said channel (29) extending along a main direction and presenting an inlet (30) and an outlet (31);
a sonotrode (32) installed inside the channel (29) and configured to generate sound waves;
wherein said at least one dynamic magnetic field generator (25) is coupled to the cavitation device (15) and the section of the recirculation conduit (8a, 8b, 8c, 8d) with the dynamic magnetic field is the channel (29) of the cavitation device (15).

5. The apparatus of claim 4, wherein the sonotrode (32) comprises a plurality of laminae (33) installed inside the channel (29) and a plurality of actuators to make the laminae (33) vibrate; wherein the laminae (33) delimit a spiral path through the channel (29).

6. Process for stable nano emulsion of water in diesel fuel, comprising:
▪ feeding a predetermined amount of a diesel fuel (F) into a mixing tank (7);
▪ feeding a predetermined amount of water (W) into the mixing tank (7);
▪ feeding a predetermined amount of magnetite nano-particles (MNP) into the mixing tank (7);
▪ recirculating a batch of mixture in the mixing tank (7) comprising the diesel fuel (F), the water (W) and the magnetite nano-particles (MNP) through recirculation conduit (8a, 8b, 8c, 8d) comprising a mixing device (14) and/or a cavitation device (15);
wherein a flow of the mixture flowing through the recirculation conduit (8a, 8b, 8c, 8d) is also subjected to a dynamic magnetic field to move the magnetite nano-particles (MNP) and promoting emulsion;
▪ discharging the emulsion batch from the mixing tank (7);
▪ optionally, removing the magnetite nano-particles (MNP) from the emulsion.

7. The process of claim 6, wherein recirculating the batch of mixture in the mixing tank (7) comprises: flowing the mixture through at least one mixing device (14) and applying the dynamic magnetic field to the mixture flowing through said at least one mixing device (14).

8. The process of claim 6, wherein recirculating the batch of mixture in the mixing tank (7) comprises: spraying the mixture in the mixing tank (7) via said at least one mixing device (14).

9. The process of claim 6, 7 or 8, wherein recirculating the batch of mixture in the mixing tank (7) comprises: flowing the mixture through at least one cavitation device (15) and applying the dynamic magnetic field to the mixture flowing through said at least one cavitation device (15).

10. The process of any of claims 6 to 9, further comprising: feeding a predetermined amount of ammonia and/or methanol into the mixing tank (7) so that the batch of mixture in the mixing tank (7) comprises also ammonia and/or methanol.

## Patentansprüche

1. Vorrichtung für stabile Nanoemulsionen von Wasser in Dieselkraftstoff, umfassend:
wenigstens eine Dieselkraftstoff-Zuführeinheit (2);
wenigstens eine Wasser-Zuführeinheit (3);
wenigstens eine Magnetit-Nanopartikel-Zuführeinheit (4), welche die Magnetit-Nanopartikel (MNP) umfasst;
einen Mischtank (7), welcher in Fluidverbindung mit der Dieselkraftstoff-Zuführeinheit (2), mit der Wasser-Zuführeinheit (3) und mit der Magnetit-Nanopartikel-Zuführeinheit (4) steht;
wenigstens eine Rezirkulationsleitung (8a, 8b, 8c, 8d), welche gegenüberliegende Enden umfasst, die mit dem Mischtank (7) verbunden sind;
wenigstens eine Pumpe (9), welche an der Rezirkulationsleitung (8a, 8b, 8c, 8d) angeordnet und dazu eingerichtet ist, ein Gemisch, welches den Dieselkraftstoff (F), das Wasser (W) und die Magnetit-Nanopartikel (MNP) umfasst, zu rezirkulieren;
wenigstens einen dynamischen Magnetfeldgenerator (25), welcher betriebsmäßig mit der Rezirkulationsleitung (8a, 8b, 8c, 8d) gekoppelt und dazu eingerichtet ist, ein dynamisches Magnetfeld innerhalb wenigstens eines Bereichs der Rezirkulationsleitung (8a, 8b, 8c, 8d) zu erzeugen.

2. Vorrichtung nach Anspruch 1, umfassend wenigstens eine Mischvorrichtung (14), welche an einem Ende der Rezirkulationsleitung (8a, 8b, 8c, 8d) angeordnet ist;
wobei die wenigstens eine Mischvorrichtung (14) umfasst:
einen Kanal (20) für eine Strömung des Gemisches, wobei der Kanal (20) sich entlang einer Hauptrichtung (X-X) erstreckt und einen Einlass sowie einen Auslass (22) umfasst;
einen Rotor (21), welcher drehbar innerhalb des Kanals (20) installiert ist und sich entlang des gesamten Kanals (20) erstreckt;
wobei der Rotor (20) eine Mehrzahl von radialen Vorsprüngen umfasst;
wobei wenigstens der Auslass (22) der wenigstens einen Mischvorrichtung (14) innerhalb des Mischtanks (7) positioniert und dazu eingerichtet ist, das rezirkulierte Gemisch in den Tank (7) zu sprühen;
wobei der wenigstens eine dynamische Magnetfeldgenerator (25) mit der Mischvorrichtung (14) gekoppelt ist und der Bereich der Rezirkulationsleitung (8a, 8b, 8c, 8d) mit dem dynamischen Magnetfeld der Kanal (20) der Mischvorrichtung (14) ist.

3. Vorrichtung nach Anspruch 2, umfassend eine Mehrzahl der Mischvorrichtungen (14), welche innerhalb des Mischtanks (7) installiert sind, wobei die Hauptrichtungen (X-X) der Mischvorrichtungen (14) schräg gestellt in Bezug auf eine Mittelachse (X-X) des Mischtanks (7) sind, um dem Gemisch im Mischtank (7) durch Sprühen des rezirkulierten Gemisches in den Tank (7) eine Rotationsbewegung zu verleihen.

4. Vorrichtung nach Anspruch 1 oder 2 oder 3, umfassend wenigstens eine Kavitationsvorrichtung (15), welche an der Rezirkulationsleitung (8a, 8b, 8c, 8d) angeordnet ist, wobei die wenigstens eine Kavitationsvorrichtung (15) umfasst:
einen Kanal (29) für eine Strömung des Gemisches, wobei der Kanal (29) sich entlang einer Hauptrichtung erstreckt und einen Einlass (30) sowie einen Auslass (31) umfasst;
eine Sonotrode (32), welche innerhalb des Kanals (29) installiert und dazu eingerichtet ist, Schallwellen zu erzeugen;
wobei der wenigstens eine dynamische Magnetfeldgenerator (25) mit der Kavitationsvorrichtung (15) gekoppelt ist und der Bereich der Rezirkulationsleitung (8a, 8b, 8c, 8d) mit dem dynamischen Magnetfeld der Kanal (29) der Kavitationsvorrichtung (15) ist.

5. Vorrichtung nach Anspruch 4, wobei die Sonotrode (32) eine Mehrzahl von Lamellen (33), welche innerhalb des Kanals (29) installiert sind, sowie eine Mehrzahl von Aktuatoren umfasst, um die Lamellen (33) zum Vibrieren zu bringen; wobei die Lamellen (33) einen spiralförmigen Verlauf durch den Kanal (29) begrenzen.

6. Verfahren für stabile Nanoemulsionen von Wasser in Dieselkraftstoff, umfassend:
- Zuführen einer vorbestimmten Menge eines Dieselkraftstoffs (F) in einen Mischtank (7);
- Zuführen einer vorbestimmten Menge Wasser (W) in den Mischtank (7);
- Zuführen einer vorbestimmten Menge Magnetit-Nanopartikel (MNP) in den Mischtank (7);
- Rezirkulieren einer Charge des Gemisches im Mischtank (7), welche den Dieselkraftstoff (F), das Wasser (W) und die Magnetit-Nanopartikel (MNP) umfasst, durch eine Rezirkulationsleitung (8a, 8b, 8c, 8d), welche eine Mischvorrichtung (14) und/oder eine Kavitationsvorrichtung (15) umfasst;
wobei eine Strömung des Gemisches, welche durch die Rezirkulationsleitung (8a, 8b, 8c, 8d) strömt, ferner einem dynamischen Magnetfeld ausgesetzt wird, um die Magnetit-Nanopartikel (MNP) zu bewegen und die Emulsion zu fördern;
- Ablassen der Emulsionscharge aus dem Mischtank (7);
- optionales Entfernen der Magnetit-Nanopartikel (MNP) aus der Emulsion.

7. Verfahren nach Anspruch 6, wobei das Rezirkulieren der Charge des Gemisches im Mischtank (7) umfasst: Durchströmen des Gemisches durch wenigstens eine Mischvorrichtung (14) und Beaufschlagen des Gemisches, welches durch die wenigstens eine Mischvorrichtung (14) strömt, mit dem dynamischen Magnetfeld.

8. Verfahren nach Anspruch 6, wobei das Rezirkulieren der Charge des Gemisches im Mischtank (7) umfasst: Sprühen des Gemisches in den Mischtank (7) mittels der wenigstens einen Mischvorrichtung (14).

9. Verfahren nach Anspruch 6, 7 oder 8, wobei das Rezirkulieren der Charge des Gemisches im Mischtank (7) umfasst: Durchströmen des Gemisches durch wenigstens eine Kavitationsvorrichtung (15) und Beaufschlagen des Gemischs, welches durch die wenigstens eine Kavitationsvorrichtung (15) strömt, mit dem dynamischen Magnetfeld.

10. Verfahren nach einem der Ansprüche 6 bis 9, ferner umfassend: Zuführen einer vorbestimmten Menge Ammoniak und/oder Methanol in den Mischtank (7), sodass die Charge des Gemisches im Mischtank (7) ferner Ammoniak und/oder Methanol umfasst.

## Revendications

1. Appareil pour nano-émulsions stables d'eau dans du carburant diesel, comprenant :
au moins une unité d'alimentation de carburant diesel (2) ;
au moins une unité d'alimentation d'eau (3) ;
au moins une unité d'alimentation de nanoparticules de magnétite (4) comprenant les nanoparticules de magnétite (MNP) ;
une cuve de mélange (7) en communication fluidique avec l'unité d'alimentation de carburant diesel (2), avec l'unité d'alimentation d'eau (3) et avec l'unité d'alimentation de nanoparticules de magnétite (4) ;
au moins une conduite de recirculation (8a, 8b, 8c, 8d) présentant des extrémités opposées raccordées à la cuve de mélange (7) ;
au moins une pompe (9) placée sur ladite conduite de recirculation (8a, 8b, 8c, 8d) et configurée pour faire recirculer un mélange comprenant le carburant diesel (F), l'eau (W) et les nanoparticules de magnétite (MNP) ;
au moins un générateur de champ magnétique dynamique (25) fonctionnellement accouplé à la conduite de recirculation (8a, 8b, 8c, 8d) et configuré pour générer un champ magnétique dynamique à l'intérieur d'au moins une section de la conduite de recirculation (8a, 8b, 8c, 8d).

2. Appareil selon la revendication 1, comprenant au moins un dispositif de mélange (14) placé à une extrémité de ladite conduite de recirculation (8a, 8b, 8c, 8d) ;
dans lequel ledit au moins un dispositif de mélange (14) comprend :
un conduit (20) pour un écoulement du mélange, ledit conduit (20) s'étendant le long d'une direction principale (X-X) et présentant un orifice d'entrée et un orifice de sortie (22) ;
un rotor (21) installé de manière à pouvoir tourner à l'intérieur du conduit (20) et s'étendant tout le long du conduit (20) ;
dans lequel le rotor (20) comprend une pluralité de projections radiales ;
dans lequel au moins l'orifice de sortie (22) du au moins un dispositif de mélange (14) est positionné à l'intérieur de la cuve de mélange (7) et est configuré pour pulvériser le mélange remis en circulation dans la cuve (7) ;
dans lequel ledit au moins un générateur de champ magnétique dynamique (25) est accouplé au dispositif de mélange (14) et la section de la conduite de recirculation (8a, 8b, 8c, 8d) avec le champ magnétique dynamique est le conduit (20) du dispositif de mélange (14).

3. Appareil selon la revendication 2, comprenant une pluralité desdits dispositifs de mélange (14) installés à l'intérieur de la cuve de mélange (7), dans lequel les directions principales (X-X) des dispositifs de mélange (14) sont inclinées par rapport à un axe central (X-X) de la cuve de mélange (7) pour conférer un mouvement de rotation au mélange dans la cuve de mélange (7) par pulvérisation du mélange remis en circulation dans la cuve (7).

4. Appareil selon la revendication 1 ou 2 ou 3, comprenant au moins un dispositif de cavitation (15) placé sur la conduite de recirculation (8a, 8b, 8c, 8d) ; dans lequel ledit au moins un dispositif de cavitation (15) comprend :
un canal (29) pour un écoulement du mélange, ledit canal (29) s'étendant le long d'une direction principale et présentant un orifice d'entrée (30) et un orifice de sortie (31) ;
une sonotrode (32) installée à l'intérieur du canal (29) et configurée pour générer des ondes de son ;
dans lequel ledit au moins un générateur de champ magnétique dynamique (25) est accouplé au dispositif de cavitation (15) et la section de la conduite de recirculation (8a, 8b, 8c, 8d) avec le champ magnétique dynamique est le canal (29) du dispositif de cavitation (15).

5. Appareil selon la revendication 4, dans lequel la sonotrode (32) comprend une pluralité de lamelles (33) installées à l'intérieur du canal (29) et une pluralité d'actionneurs pour faire vibrer les lamelles (33) ; dans lequel les lamelles (33) délimitent un trajet en spirale à travers le canal (29).

6. Procédé pour nano-émulsion stable d'eau dans du carburant diesel, comprenant :
▪ l'alimentation d'une quantité prédéterminée d'un carburant diesel (F) dans une cuve de mélange (7) ;
▪ l'alimentation d'une quantité prédéterminée d'eau (W) dans la cuve de mélange (7) ;
▪ l'alimentation d'une quantité prédéterminée de nanoparticules de magnétite (MNP) dans la cuve de mélange (7) ;
▪ la remise en circulation d'un lot de mélange dans la cuve de mélange (7) comprenant le carburant diesel (F), l'eau (W) et les nanoparticules de magnétite (MNP) à travers la conduite de recirculation (8a, 8b, 8c, 8d) comprenant un dispositif de mélange (14) et/ou un dispositif de cavitation (15) ;
dans lequel un écoulement du mélange s'écoulant à travers la conduite de recirculation (8a, 8b, 8c, 8d) est également soumis à un champ magnétique dynamique pour déplacer les nanoparticules de magnétite (MNP) et favoriser l'émulsion ;
▪ l'évacuation du lot d'émulsion de la cuve de mélange (7) ;
▪ éventuellement, le retrait des nanoparticules de magnétite (MNP) de l'émulsion.

7. Procédé selon la revendication 6, dans lequel la remise en circulation du lot de mélange dans la cuve de mélange (7) comprend : l'écoulement du mélange à travers au moins un dispositif de mélange (14) et l'application du champ magnétique dynamique au mélange s'écoulant à travers ledit au moins un dispositif de mélange (14).

8. Procédé selon la revendication 6, dans lequel la remise en circulation du lot de mélange dans la cuve de mélange (7) comprend : la pulvérisation du mélange dans la cuve de mélange (7) par l'intermédiaire dudit au moins un dispositif de mélange (14).

9. Procédé selon la revendication 6, 7 ou 8, dans lequel la remise en circulation du lot de mélange dans la cuve de mélange (7) comprend : l'écoulement du mélange à travers au moins un dispositif de cavitation (15) et l'application du champ magnétique dynamique au mélange s'écoulant à travers ledit au moins un dispositif de cavitation (15).

10. Procédé selon l'une quelconque des revendications 6 à 9, comprenant en outre : l'alimentation d'une quantité prédéterminée d'ammoniac et/ou de méthanol dans la cuve de mélange (7) de sorte que le lot de mélange dans la cuve de mélange (7) comprend également de l'ammoniac et/ou du méthanol.
